# EUROPEAN PATENT APPLICATION

(11) **EP 2 785 024 A1**
(43) Date of publication of application: **01.10.2014**
(21) Application number: 13180875.0
(22) Date of filing: 19.08.2013
(51) Int. Cl.: H04M 1/02, H04M 1/15, G02B 6/44, G02B 6/38, H04W 88/08

(54) **Network Communication Access Module And Cable Organizer Thereof**

(30) Priority: 28.03.2013 CN 201320148612 U
(71) Applicant: Sercomm Corporation, Taipei 115 (TW)
(72) Inventor: Yu-Li, Shen, 10015 Taipei (TW); Ying-Hsiang, Wu, 106 Taipei City (TW); Yi-Fei, Yu, 248 New Taipei City (TW)
(74) Representative: Von Kreisler Selting Werner - Partnerschaft von Patentanwälten und Rechtsanwälten mbB

(57) **Abstract**

A network communication access module and a cable organizer thereof are provided. The network communication access module comprises an access point (AP) (10) and a cable organizer (20).

The AP has a body (110) and a receiving slot (108). The front side of the body has an indicator (111). The back side of the body has a ventilation slot (107) and a wall-mounted slot (113). The four lateral sides (103) of the body are surrounded by a ring-shaped recess (104) having a slender ventilation slot. The body has an engaging portion (115) and a connection port (116) disposed on the sidewall of the receiving slot. The connection port is connected to a physical network via a transmission medium (30): the trasnmission medium can be an optical cable connecting to a fiber network providing fiber to the home (FTTH) service or fiber to the building (FTTB) or fiber to the curb (FTTC) service or other broadband network (such as ADSL network) service.

The cable organizer is fixed on a wall (51) and adjacent to an exposed cable (31). The cable organizer comprises a holder (121) and a winding reel (122). The holder is buckled in the receiving slot (108), such that the connector is jointed to the connection port (116).

## Description

### BACKGROUND OF THE INVENTION

### Field of the Invention

The invention relates in general to a network communication device, and more particularly to a network communication access module and a cable organizer thereof.

### Description of the Related Art

With the popularity of network in recent years, network communication has become available in households, business entities and public places. Particularly, the disposition of wireless local area network (WLAN) can do without penetrating the walls or making the cables entangled. Moreover, the access point (AP) can be used as a node between the wireless communication device used in a wireless network and the cabled communication device used in a physical network for converting the data into a format conforming to the communication protocol of the physical network or the wireless network and transmitting the data to the external. The AP is actually a bridge of data transmission between the physical network and the wireless network. In addition, the physical network can further be connected to a public network (such as Internet) via a router or a modem to transmit data.

In recent years, the configuration of physical network is directed towards the fiber communication network advantageously having large transmission volume and excellent security protection. Particularly, when it comes to long distance and large volume transmission, the quality of fiber communication is far better than conventional cable communication, and can thus implements fiber to the home (FTTH) service. However, the fiber has a small external diameter, and cannot be over bent during the installation and wiring, otherwise the fiber may break up or the optical signal may decay. Therefore, how to maintain network communication quality and assembly convenience has become a prominent task for the industries.

### SUMMARY OF THE INVENTION

The invention is directed to a network communication access module and a cable organizer thereof capable of providing a mounting member required in the configuration of a physical network to maintain the quality of network communication and convenience of assembly.

According to one embodiment of the present invention, a network communication access module is provided. The network communication access module comprises an access point (AP) and a cable organizer. The AP has a body and a receiving slot. The front side of the body has an indicator. The back side of the body has a ventilation slot and a wall-mounted slot. The four lateral sides of the body are formed with a ring-shaped recess around the body and has a slender ventilation slot disposed in the ring-shaped recess. The body has an engaging portion and a physical network connection port disposed on the sidewall of the receiving slot. The physical network connection port is used for connecting to a physical network via a transmission medium. The cable organizer is used to be fixed on a wall and adjacent to an exposed cable of the transmission medium. The cable organizer comprises a holder and a winding reel respectively used for fixing a connector disposed at a terminal end of the exposed cable and receiving the exposed cable. The holder is buckled in the receiving slot, such that the connector is jointed to the physical network connection port.

In the network communication access module, the AP is a wireless AP used as a node between a wireless network and the physical network.

In the network communication access module, the AP further comprises a detachable cover disposed on a corner of the body and covering the receiving slot.

In the network communication access module, the cable organizer comprises a bottom casing, a jacket and a jacket extension member. The bottom casing has a bottom side and four lateral sides, the holder and the winding reel are disposed on the bottom side, the four lateral sides of the bottom casing respectively have a cable entrance hole, and the exposed cable enters the bottom casing via one of the cable entrance holes. The jacket buckles the holder to clamp the connector on the holder. The jacket extension member is extended from the jacket along one side of the bottom casing and combined with the bottom casing or the body.

In the network communication access module, when the bottom casing is combined with different sizes of bodies, the length of the jacket extension member matches the length of a body such that the jacket extension member and the body are integrated in one piece.

In the network communication access module, the bottom casing has a hook opposite to the back side of the body, and the hook is engaged with a corresponding wall-mounted slot.

In the network communication access module, the bottom side has an opening opposite to the back side of the body, the opening is located in the winding reel and corresponding to the ventilation slot on the back side of the body.

In the network communication access module, the winding reel has a curvature radius greater than 15∼20 times of the external diameter of the exposed cable, such that the exposed cable is wound on the winding reel according to the curvature radius.

According to another embodiment of the present invention, a cable organizer used to be fixed on a wall and adjacent to an exposed cable of a transmission medium is provided. The cable organizer comprises a holder, a bottom casing, a jacket, and a jacket extension member. The holder is used to fix a connector disposed at a terminal end of the exposed cable. The winding reel receives the exposed cable. The bottom casing has a bottom side and four lateral sides, wherein the holder and the winding reel are disposed on the bottom side, the four lateral sides of the bottom casing respectively have a cable entrance hole, and the exposed cable enters the bottom casing via one of the cable entrance holes. The jacket buckles the holder to clamp the connector on the holder. The jacket extension member is extended from one side of the jacket along the bottom casing and combined with the bottom casing.

In the cable organizer, when the bottom casing is combined with bodies of different sizes, the length of the jacket extension member matches the length of a body such that the jacket extension member and the body are integrated in one piece.

In the cable organizer, the winding reel has a curvature radius greater than 15∼20 times of the external diameter of the exposed cable, such that the exposed cable is wound on the winding reel according to the curvature radius.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 shows a 3D diagram of an AP according to an embodiment.

FIG. 2 shows a schematic diagram of the bottom of an AP according to an embodiment.

FIG. 3 shows an arrangement diagram of a network communication access module according to an embodiment of the invention.

FIG. 4 shows an explosion diagram of a network communication access module according to an embodiment.

FIG. 5 shows an explosion diagram of a cable organizer according to an embodiment of the invention.

FIG. 6A and FIG. 6B respectively are assembly diagrams of a uni-sized bottom casing and the bodies of various sizes.

### DETAILED DESCRIPTION OF THE INVENTION

The structural and operating principles of the invention are disclosed below in a number of exemplarily embodiments with accompanying drawings.

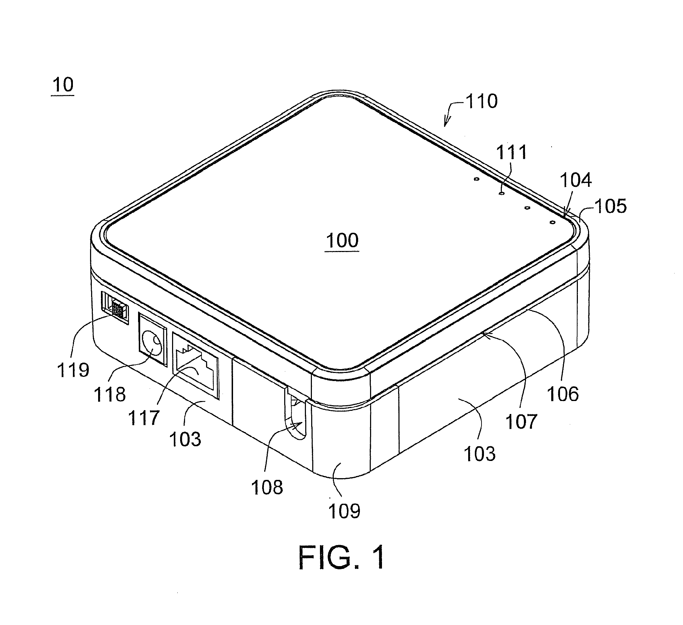

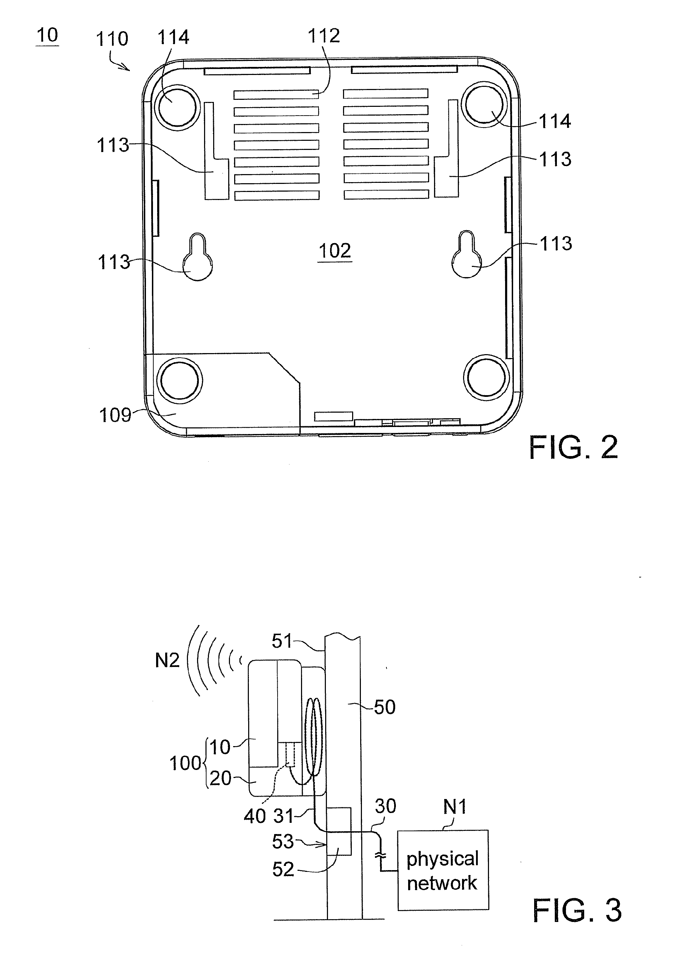

Referring to FIG. 1 and FIG. 2. FIG. 1 shows a 3D diagram of an AP 10 according to an embodiment. FIG. 2 shows a schematic diagram of the bottom of an AP 10 according to an embodiment. In the present embodiment of the invention, the body 110 of the AP 10 has a squared shape with arced corners. The body 110 has a front side 101, a back side 102 and four lateral sides 103. The front side 101 of the body 110 has an indicator 111. The back side 102 of the body 110 has a ventilation slot 112 and a wall-mounted slot 113. Besides, the back side 102 of the body 110 can have a number of shock-absorbing pads 114. As indicated in the 3D diagram, the front side 101 of the body 110 is formed with a ring-shaped recess 104 and a trim 105 such that the appearance of the body 110 has gradation. Furthermore, a ring-shaped recess 106 surrounds the four lateral sides 103 of the body 110. A slender ventilation slot 107 is concealed in the ring-shaped recess 106. Therefore, the slender ventilation slot 107, being concealed in the ring-shaped recess 106 around the lateral sides 103, will not be detected easily.

The slender ventilation slot 107 around the lateral sides 103 increases heat dissipation efficiency of the body 110 and avoids the internal elements of the body 110 being overheated and incapacitated.

The indicator 111 indicates the network connection state or the equipment state. For example, the loss of signal (LOS) indicator flickers when problems occur to the optical signal; the passive optical network (PON) indicator is off when the optical equipment becomes abnormal. Besides, the indicator 111 indicates the local area network (LAN) connection state or the switch state of power.

In addition, the AP 10 further has a receiving slot 108 and a detachable cover 109 covering the receiving slot 108. The detachable cover 109 is disposed on the corner of the body 110 between two adjacent lateral sides 103. Preferably, the detachable cover 109, the connection port 117, the power connector 118 and the switch 119 are located on the same lateral side 103 of the body 110. The detachable cover 109 conceals a connection port in the receiving slot 108. When the connection port is needed, the user only needs to lift the detachable cover 109 and place the AP 10 on a cable organizer. The said connection port is such as a physical network connection port 116, which can be connected to a physical network N1 via a transmission medium 30 as indicated in FIG. 3.

Referring to FIG. 3, a decomposition diagram of a network communication access module 100 according to an embodiment of the invention is shown. The network communication access module 100 comprises an access point (AP) 10 and a cable organizer 20. The cable organizer 20 is fixed on a wall 51 and adjacent to an exposed cable 31 of the transmission medium 30. As indicated in FIG. 3, the transmission medium 30 can be disposed in a pipe shaft 52 of the wall 50 and extended to the indoor space via an exit 53 of the pipe shaft 52, such that the physical network N1 can reach every indoor space via the transmission medium 30. Besides, the cable 31 exposed when the transmission medium 30 enters the indoor space can be received in the cable organizer 20, and the connector 40 disposed at a terminal end of the exposed cable 31 can be fixed in the cable organizer 20. Thus, the cable organizer 20 provides a diversity of functions such as appearance design and assembly convenience.

The transmission medium 30 is an optical cable or an electric cable, for example. The fiber network configured with optical cable can provide fiber to the home (FTTH) service. However, application of the invention is not limited to fiber to the home, and can also be used in fiber to the building (FTTB), fiber to the curb (FTTC) service or other broadband network (such as ADSL network) service.

The AP 10 of the present embodiment of the invention is a wireless AP used as a node between a wireless network N2 and a physical network N1. Therefore, the AP 10 between the wireless communication device used in the wireless network N2 and the cabled communication device used in the physical network N1 can convert the data into a format conforming to the communication protocol of the physical network N1 or the wireless network N2 and transmitting the data to the external.

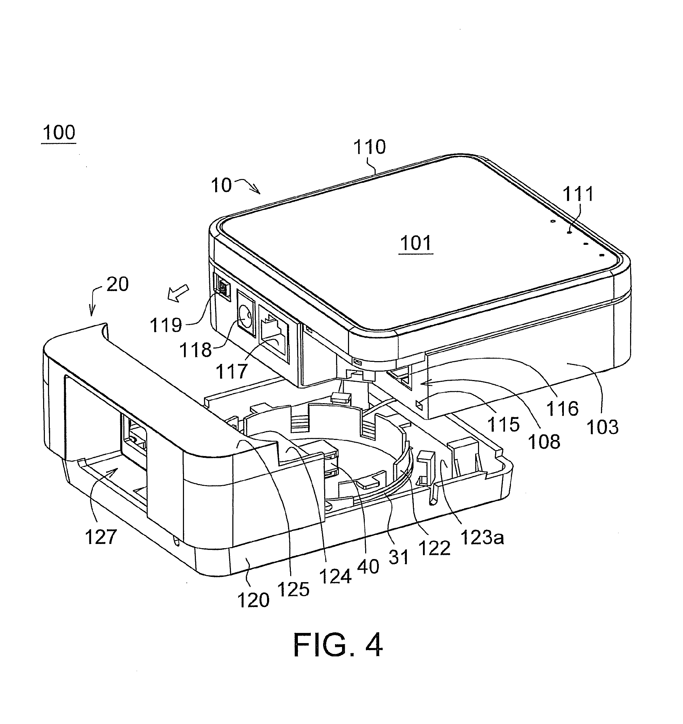

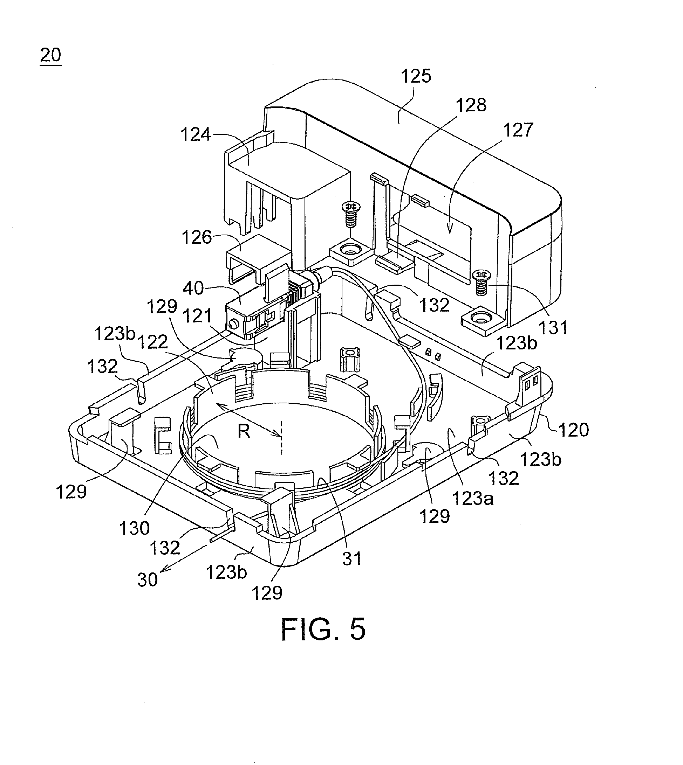

Referring to FIG. 4 and FIG. 5. FIG. 4 shows an explosion diagram of a network communication access module 100 according to an embodiment. FIG. 5 shows an explosion diagram of a cable organizer 20 according to an embodiment of the invention. As indicated in FIG. 4, the body 110 has an engaging portion 115 and a physical network connection port 116 disposed on the sidewall of the receiving slot 108, and the body 110 can be disposed on the cable organizer 20 along an assembly direction. Meanwhile, when the cover 109 of FIG. 1 is detached to expose the receiving slot 108, the reserved space allows the connector 40 to be jointed to the physical network connection port 116 for transmitting data.

Referring to FIG. 5, the cable organizer 20 comprises a holder 121, a winding reel 122, a bottom casing 120, a jacket 124 and a jacket extension member 125. The holder 121 fixes the connector 40 disposed at a terminal end of the exposed cable 31. The connector 40 can be a fiber connector, a fiber coupler or a cable connector. The holder 121 can be buckled in the receiving slot 108, such that the connector 40 is jointed to the physical network connection port 116. The winding reel 122 receives the exposed cable 31 of the transmission medium 30, such that the external appearance will not be affected by the exposed cable 31.

The bottom casing 120 has a bottom side 123a and four lateral sides 123b. The holder 121 and the winding reel 122 are disposed on the bottom side 123a. The four lateral sides 123b of the bottom casing 120 respectively have a cable entrance hole 132, and the exposed cable 31 can enter the bottom casing 120 via one of the cable entrance holes 132. Since the entrance position of the cable organizer 20 is adjusted according to the location of the cable 31, the exposed cable 31 can enter the bottom casing 120 via a nearest cable entrance hole 132 and will not be over bent and damaged.

In addition, when the connector 40 is fixed on the holder 121, the jacket 124 can be buckled in the holder 121 to clamp the connector 40 from atop of the holder 121. Moreover, the jacket 124 can be bucked in the holder 121 in conjunction with another mounting member 126 to clamp the connector 40.

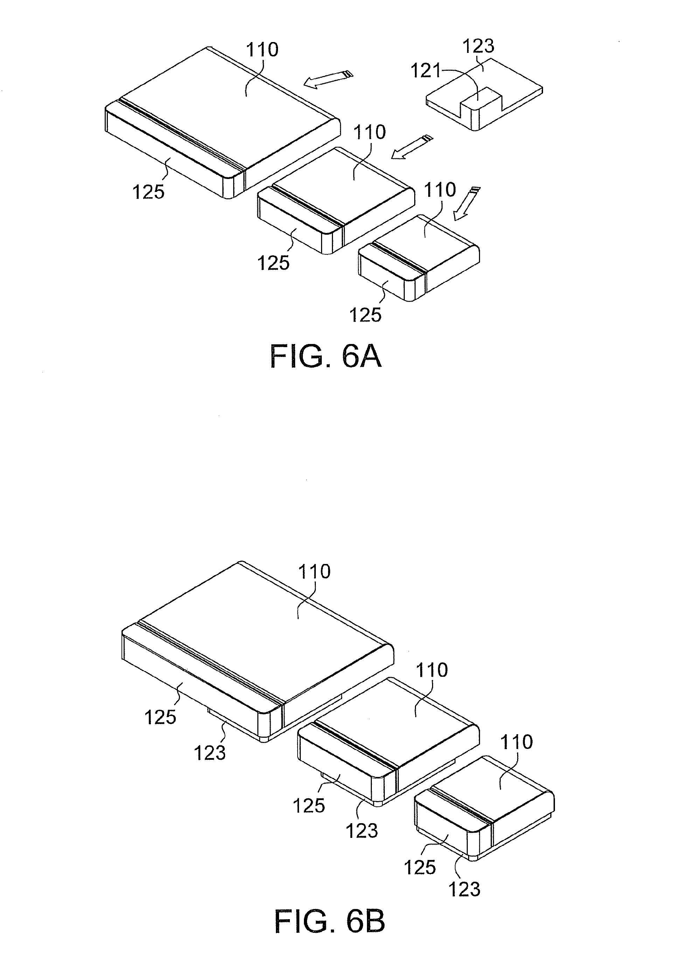

Moreover, the jacket extension member 125 is extended from the jacket 124 along one side of the bottom casing 120, and can be combined with the bottom casing 120 or the body 110 (referring to FIG. 6A and FIG. 6B) by the screw 131. As indicated in FIG. 4, the jacket extension member 125 and the connection port 117, the power connector 118 and the switch 119 of the body 110 are disposed on the same side, and the jacket extension member 125 has an open slot 127 for exposing elements such as the connection port 117, the power connector 118 and the switch 119 of the body 110. Thus, the user can connect the connection port 117 of the body 110 to the local area network via the open slot 127, input power to the power connector 118 or selectively turn on/off the switch 119 of the power. Besides, the user can buckle or unbuckle the body 110 of AP 10 on the cable organizer 20 by using an engaging member 128 (shown in FIG.5).

In the present embodiment of the invention, the bottom casing 120 has a plurality of hooks 129 opposite to the back side 102 of the body 110, wherein each hook 129 is engaged with a corresponding wall-mounted slot 113 (referring to FIG. 2) for fixing the body 110 on the bottom casing 120. In addition, the bottom side 123a of the bottom casing 120 has an opening 130 which is opposite to the back side 102 of the body 110, located in the winding reel 122 and corresponding to a ventilation slot 112 (referring to FIG. 2) disposed on the back side 102 of the body 110 for increasing heat dissipation efficiency and quickly dissipating the heat off the body 110.

Besides, the winding reel 122 can be a hollowed disc having a curvature radius R preferably greater than 15∼20 times of the external diameter of the exposed cable 31, such that the exposed cable 31 can be wound on the winding reel 122 according to a radius within the range of the curvature radius R. Particularly, in a fiber network, when the fiber cable 31 is wound according to a radius within the range of the curvature radius R, the fiber will not break up or become over bent such that the optical signal will not decay or become abnormal.

Referring to FIG. 6A and FIG. 6B, assembly diagrams of a uni-sized bottom casing 120 and the bodies 110 of various sizes. In the present embodiment of the invention, the size of the bottom casing 120 is constant and the position of the holder 121 is fixed, and there are a number of jacket extension members 125 whose lengths are adjustable and can be taken in conjunction with the bodies 110 of various lengths. Thus, when the size of a body 110 changes, the user can select a jacket extension member 125 whose length matches the length of a body 110 such that the jacket extension member 125 and the body 110 can be integrated in one piece. Then, the body 110 is fixed on the uni-sized bottom casing 120. Since the size of the bottom casing 120 does not need to vary with the size of the body 110, both element costs and assembly hours can be reduced.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A network communication access module, **characterized in that** the network communication access module comprises:
an access point (AP) having a body and a receiving slot, wherein a front side of the body has an indicator, a back side of the body has a ventilation slot and a wall-mounted slot, four lateral sides of the body are formed with a ring-shaped recess around the body and has a slender ventilation slot disposed in the ring-shaped recess, the body has an engaging portion and a physical network connection port disposed on the sidewall of the receiving slot, and the physical network connection port is connected to a physical network via a transmission medium; and
a cable organizer used to be fixed on a wall and adjacent to an exposed cable of the transmission medium, wherein the cable organizer comprises a holder and a winding reel respectively used for fixing a connector disposed at a terminal end of the exposed cable and receiving the exposed cable, and the holder is buckled in the receiving slot, such that the connector is jointed to the physical network connection port.

2. The network communication access module according to claim 1, wherein the AP is a wireless AP used as a node between a wireless network and the physical network.

3. The network communication access module according to claim 1, wherein the AP further comprises a detachable cover disposed on a corner of the body and covering the receiving slot.

4. The network communication access module according to claim 1, wherein the cable organizer comprises:
a bottom casing having a bottom side and four lateral sides, wherein the holder and the winding reel are disposed on the bottom side, the four lateral sides of the bottom casing respectively have a cable entrance hole, and the exposed cable enters the bottom casing via one of the cable entrance holes;
a jacket for buckling the holder to clamp the connector on the holder; and
a jacket extension member extended from the jacket along one side of the bottom casing and combined with the bottom casing or the body.

5. The network communication access module according to claim 4, wherein when the bottom casing is combined with different sizes of bodies, the length of the jacket extension member matches the length of a body such that the jacket extension member and the body are integrated in one piece.

6. The network communication access module according to claim 4, wherein the bottom casing has a hook opposite to the back side of the body, and the hook is engaged with a corresponding wall-mounted slot.

7. The network communication access module according to claim 4, wherein the bottom side has an opening which is opposite to the back side of the body, located in the winding reel and corresponding to the ventilation slot on the back side of the body.

8. The network communication access module according to claim 1, wherein the winding reel has a curvature radius greater than 15∼20 times of the external diameter of the exposed cable, such that the exposed cable is wound on the winding reel according to the curvature radius.

9. A cable organizer used to be fixed on a wall and adjacent to an exposed cable of a transmission medium, **characterized in that** the cable organizer comprises:
a holder used for fixing a connector disposed at a terminal end of the exposed cable;
a winding reel used for receiving the exposed cable;
a bottom casing having a bottom side and four lateral sides, wherein the holder and the winding reel are disposed on the bottom side, the four lateral sides of the bottom casing respectively have a cable entrance hole, and the exposed cable enters the bottom casing via one of the cable entrance holes;
a jacket buckling the holder to clamp the connector on the holder; and
a jacket extension member extended from the jacket along one side of the bottom casing and combined with the bottom casing.

10. The cable organizer according to claim 9, wherein when the bottom casing is combined with bodies of different sizes, the length of the jacket extension member matches the length of a body such that the jacket extension member and the body are integrated in one piece.

11. The cable organizer according to claim 9, wherein the winding reel has a curvature radius greater than 15∼20 times of the external diameter of the exposed cable, such that the exposed cable is wound on the winding reel according to the curvature radius.
